Europäisches Patentamt

European Patent Office

Office européen des brevets

(11) Publication number: **0 147 966**
**B1**

(12) EUROPEAN PATENT SPECIFICATION

(45) Date of publication of patent specification: **22.08.90**

(21) Application number: **84308551.5**

(22) Date of filing: **07.12.84**

(51) Int. Cl.⁵: **B 32 B 31/10, B 32 B 31/20**

(54) **Film laminating apparatus.**

(30) Priority: **09.12.83 JP 190968/83**

(43) Date of publication of application:
**10.07.85 Bulletin 85/28**

(45) Publication of the grant of the patent:
**22.08.90 Bulletin 90/34**

(84) Designated Contracting States:
**AT DE FR GB NL**

(56) References cited:
**FR-A-2 273 671**
**US-A-2 159 693**
**US-A-2 880 539**

(73) Proprietor: **SONY CORPORATION**
**7-35 Kitashinagawa 6-Chome Shinagawa-ku**
**Tokyo 141 (JP)**

(72) Inventor: **Kobayashi, Youichi c/o Patent Division**
**Sony Corporation 7-35 Kitashinagawa-6**
**Shinagawa-ku**
**Tokyo (JP)**
Inventor: **Murakami, Susumu c/o Patent Division**
**Sony Corporation 7-35 Kitashinagawa-6**
**Shinagawa-ku**
**Tokyo (JP)**

(74) Representative: **Thomas, Christopher Hugo et al**
**D Young & Co 10 Staple Inn**
**London WC1V 7RD (GB)**

Courier Press, Leamington Spa, England.

## Description

This invention relates to film laminating apparatus.

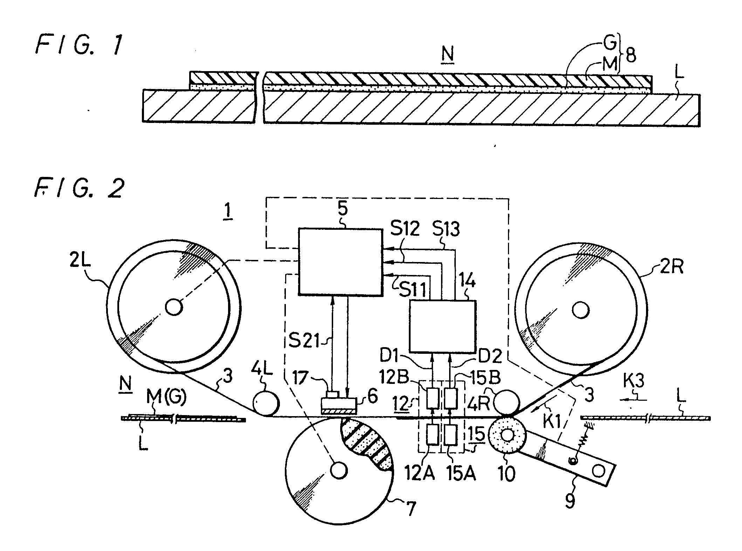

A film laminating apparatus of the kind to which the present invention relates is able to produce a sheet member N in which, as shown in Figure 1 of the accompanying drawings, a transparent protective film M made, for example, of a polyester resin material having bonded on one surface a heat bonding material G is laminated onto a paper L on which information such as characters or a picture image, which may be a colour image, are printed, thereby to protect the information printed on the paper L. In order accurately and positively to laminate the protective film M over the printed area of the paper L, the positioning of the protective film M relative to the paper L must be carried out positively and accurately.

In a prior art film laminating apparatus in which a plurality of films or sheets are laminated by a heat activated adhesive agent, a heat roller is generally used as the heating means. The heat roller has a large heat capacity and is electrically powered, so it takes some time to reach the temperature at which it becomes able to perform the lamination. Moreover, to maintain the temperature of the heat roller constant it is rotated at all times, but this causes operational difficulties and tends to raise the ambient temperature unless expensive heat insulation is provided.

US Patent specification US—A—2 880 539 discloses the use of a plate heater, but this is in a decal stamping machine in which a decalomania ribbon is moved at right angles to a conveyor belt, so there is no positive and accurate positioning of the ribbon relative to objects conveyed on the conveyor belt. .

According to the present invention there is provided à film laminating apparatus comprising:
  a work station;
  means for conveying a film to said work station;
  means for conveying papers to said work station; and
  transfer means located at said work station for transferring a heat activated workpiece on said film to a respective paper and comprising heating means including a heating plate, and optical position detecting means located at the entrance side of said transfer means and capable of detecting optical position indicating means on said film to indicate the position of said workpiece;
  characterized in that:
  said film and said papers are transported through said work station along substantially parallel paths;
  said transfer means also comprises an unheated roller; and
  the detected output of said position detecting means is used to position the leading edge of a respective said paper and said position indicating means at said position detecting means to align said paper in contact with a said workpiece formed by a heat activatable type film layer for advancement to said transfer means.

The invention will now be described by way of example with reference to the accompanying drawings, throughout which like parts are referred to by like references, and in which:

Figure 1 is a side cross-sectional view illustrating the structure of a laminated paper;

Figure 2 is a diagram showing an embodiment of film laminating apparatus according to this invention;

Figures 3A and 3B are plan views illustrating the structure of a film used in the apparatus of Figure 2;

Figures 4A to 4H are waveforms of signals in the apparatus of Figure 2;

Figure 5 is a circuit diagram of a position detecting circuit used in the apparatus of Figure 2;

Figures 6 and 7 are a plan view and a cross-sectional view respectively for explaining the positioning operation of a film and a paper; and

Figures 8A and 8B are cross-sectional diagrams for explaining the operation in which a film layer is transferred to a paper to be laminated.

The embodiment of film laminating apparatus 1 shown in Figure 2 uses a tape type film 3 which is wound around a supply reel 2R and is extended through guide rollers 4R and 4L to a take-up reel 2L. When the take-up reel 2L is intermittently rotated by a predetermined amount by a drive control circuit 5, the film 3 is intermittently moved frame by frame through the guide rollers 4R and 4L in the direction shown by an arrow K1.

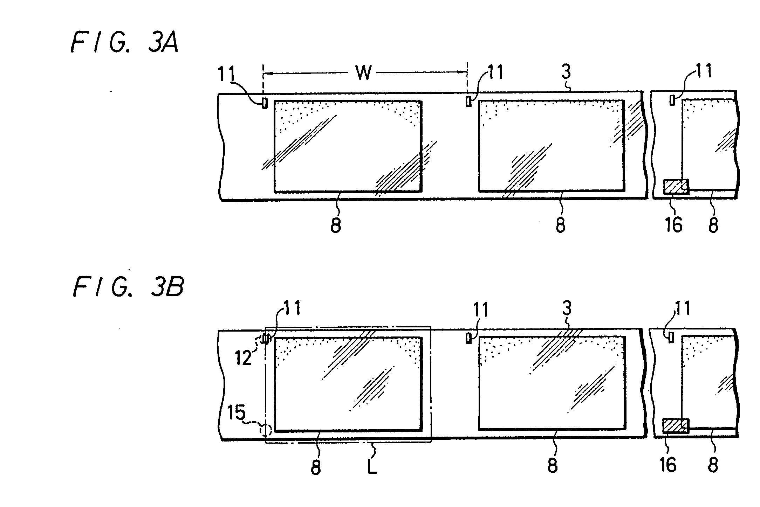

Between the guide rollers 4R and 4L, a heat bonding heater 6 and an ancillary roller 7 made of hard rubber which rotatably contacts the heater 6 are disposed so as closely to contact with each other with the film 3 therebetween. On the film 3, there is sequentially deposited frame by frame a heat-bonding film layer 8, the frames of which are slightly narrower in width and shorter in length than a paper L. The frames are at a predetermined pitch or spacing W which is longer than the length of the film layer 8 as shown in Figures 3A and 3B. The reason why the film layer 8 is not deposited on the film 3 with the frames immediately adjacent, but is deposited thereon with the gap between adjacent frames as shown in Figure 3A is as follows: if the frames in the film layer 8 were closed up on the film 3, then after the film layer 8 had been thermally bonded to the paper L, it would be difficult to cut the film layer 8 into a size a little smaller than that of the paper L; and if the portion of the film layer 8 which is not laminated on the paper L is passed through the heater 6, the adhesive agent thereof activated by heat adheres to the ancillary roller 7.

The film layer 8 is made of transparent polyester resinous material which is able to be bonded at a predetermined temperature higher than room temperature, while at room temperature, it solidifies and bonds to the film 3 to form a sheet of transparent film. Although film 3 is made of transparent polyester resinous material, it is not softened by the heat applied thereto by the heater 6 but remains in the solidified state.

Alternatively, the film 3 may be formed in such a manner that polyester resinous material which is heated and softened is coated frame by frame on the film 3 with the predetermined pitch W, solidified and then wound in a roll shape so as to the stretched between the supply reel 2R and the take-up reel 2L.

Turning back to Figure 2, the film laminating apparatus 1 will now be described more fully.

An idle roller 10 which is rotatably pivoted to the free end of a rotatable arm 9 is in rotatable contact with the entrance side guide roller 4R at the side of the supply reel 2R. When the rotatable arm 9 is rotated in the direcction to make the idle roller 10 closely contact the guide roller 4R, the idle roller 10 follows up the rotation of the guide roller 4R to grip the film 3 therebetween. The paper L is inserted between the guide roller 4R and the idle roller 10 from its entrance side so as to be superimposed on the film layer 8. At this time, the idle roller 10 delivers to the exit side the paper L and the film 3 held tightly together between the guide roller 4R and the idle roller 10.

The rotatable arm 9 is controlled to rotate by the drive control circuit 5 so that when the paper L is inserted between the guide roller 4R and the idle roller 10, the rotatable arm 9 is rotatably positioned so as to allow the idle roller 10 to be remote from the guide roller 4R, while when the paper L is superimposed on the film 3 and the delivered together, the rotatable arm 9 is rotatably positioned so as to allow the idle roller 10 to contact the guide roller 4R closely.

An aperture 11 (Figure 3) for indicating the heading or beginning of each frame of the film layer 8 is formed through the film 3 at the righthand side edge position of the film layer 8 as an optical position indicating means, and an optical position detector 12 is disposed so as to view the aperture 11 in the up and down direction. The position detector 12 comprises a light-emitting diode (LED) as a light source 12A and a photo transistor as a light receiving element 12B which receives the light emitted from the light source 12A. The position detector 12 produces a detection signal D1 of a signal level corresponding to the optical transmissivity of a member interposed between the light receiving element 12B and the light source 12A, and supplies the detection signal D1 to a position detecting circuit 14. More specifically, when the paper L is interposed between the light source 12A and the light receiving element 12B, the light from the light source 12A is shielded and does not reach the light receiving element 12B. At this time, the light receiving element 12B produces a detection signal D1 of lowest signal level L1 as shown in Figure 4A. Moreover, when the paper L is not interposed between the light source 12A and the light receiving element 12B, and also neither the aperture 11 nor the film layer 8 is therebetween, or only the film 3 is interposed therebetween, the light receiving element 12B produces a detection signal D1 of an intermediate signal level L2 shown in Figure 4A. Furthermore, when the paper L is not interposed between the light source 12A and the light receiving element 12B, but the aperture 11 is therebetween, the light receiving element 12B produces a detection signal D1 of the highest signal level L3 shown in Figure 4A.

When the detection signal D1 has the signal level L2, the light which is passed through the film 3 becomes incident on the light receiving element 12B. In this example, the optical transmissivity of the film 3 is about 75%. On the other hand, when the aperture 11 is interposed between the light source 12A and the light receiving element 12B, the light from the light source 12A passes directly to the light receiving element 12B, so that the optical transmissivity becomes 100%, while when the paper L is interposed therebetween, the optical transmissivity becomes 0%.

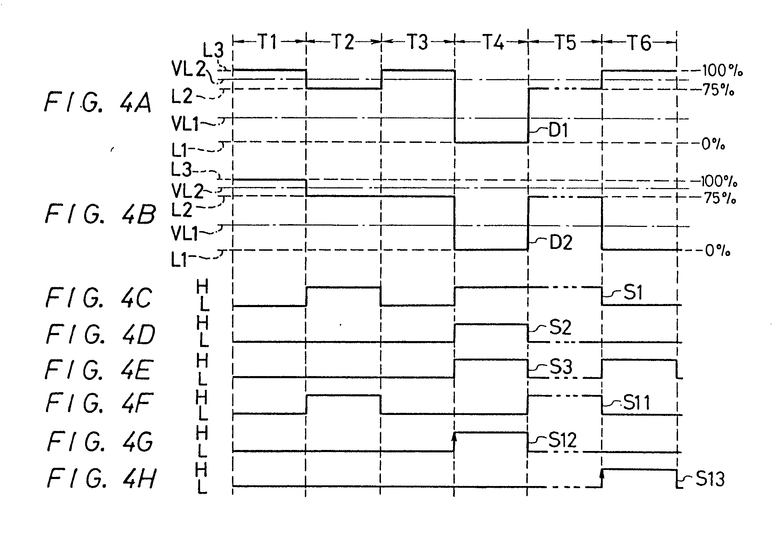

A second optical position detector 15 is disposed at a position opposing the left end edge of the film layer 8 and alongside the position detector 12. Similarly to the position detector 12, the position detector 15 comprises a light source 15A and a light receiving element 15B, in which a detection signal D2 obtained from the light receiving element 15B is fed to the position detecting circuit 14. Accordingly, as shown in Figure 4B, the detection signal D2 of the light receiving element 15B has an intermediate signal level L2 when the film 3 is interposed between the light source 15A and the light receiving element 15B, while it has the lowest signal level L1 when the paper L is interposed therebetween.

In addition, in this embodiment, an end mark 16 made of a light shielding material is coated on or bonded to the film 3 at the beginning of the last film layer 8, as an optical position indicating means, so that when this end mark 16 is interposed between the light source 15A and the light receiving element 15B, the level of the detection signal D2 becomes the lowest signal level L1.

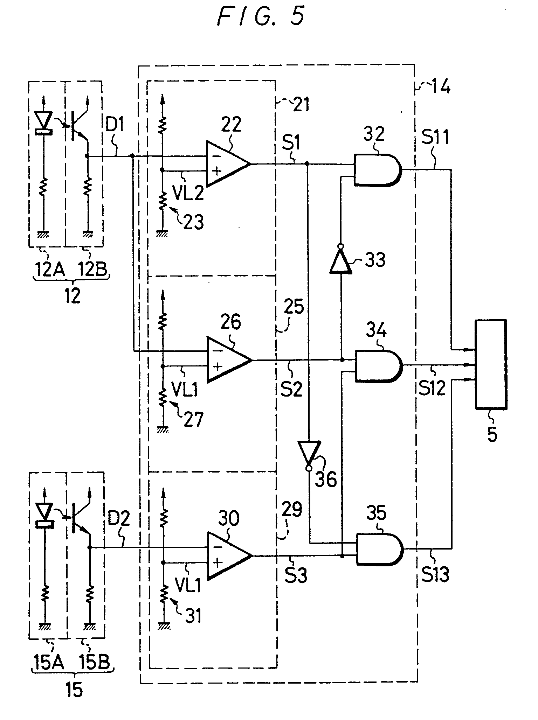

The position detecting circuit 14 receives the detection signals D1 and D2 and judges the position of the material interposed between the position detectors 12 and 15 in accordance with the transitions of the signal levels of the received signals. The detecting circuit 14 is constructed as shown in Figure 5. The detection signal D1 of the position detector 12 is supplied to an inverting input terminal of a comparing circuit 22 in a film existence identifying circuit 21 and compared with a reference level voltage VL2 which is supplied to the non-inverting input terminal of the comparing circuit 22 from a reference voltage circuit 23. The level of the reference voltage VL2 is set at an intermediate level between the intermediate detection signal level L2 and the highest detection level L3 of the detection signal D1 as shown in Figure 4A, whereby when the film 3 is interposed within the position detector 12, the signal level of the detection signal D1 becomes the signal level L2, which is lower than the reference voltage VL2, so that the comparing circuit 22 produces an identifying signal S1 of logic "H". In this case, "H" represents the high level. This means that when the aperture 11 is at the position of the position detector 12, the logic level of the identifying signal S1 falls to "L", in which "L" represents the low level.

Further, the detection signal D1 from the position detector 12 is supplied to an inverting input terminal of a comparing circuit 26 provided in a paper existence identifying circuit 25 as a comparison input and is there compared with a reference voltage VL1 supplied to the non-inverting input terminal thereof from a reference voltage circuit 27. The level of the reference voltage VL1 is set at a signal level a little higher than the level L1 of the detection signal D1, whereby when the paper L is disposed within the position detector 12 to shield the light from the light source 12A, the comparing circuit 26 produces an identifying signal S2 of logic "H". This means that when the paper L has not reached the position detector 12, regardless of the existence of the film 3, the logic level of the identifying signal S2 falls to "L".

The detection signal D2 of the position detector 15 is supplied to an inverting input terminal of a comparing circuit 30 as its comparison input in a paper and end mark identifying circuit 29, and there compared with the reference voltage VL1 which is supplied from a reference voltage circuit 31 to a non-inverting input terminal of the comparing circuit 30. The level of the reference voltage VL1 is set at a signal level a little higher than the lowest signal level L1 of the detection signal D2 as shown in Figure 4B. As a result, when the paper L or the end mark 16 is within the position detector 15, the signal level of the detection signal D2 becomes the lowest signal level L1, so that the comparing circuit 30 produces an identifying signal S3 of logic "H".

The identifying signal S1 of the comparing circuit 22 is supplied to a first two-input AND circuit 32 as its first input signal, while the identifying signal S2 of the comparing circuit 26 is supplied through an inverter 33 to the AND circuit 32 as its second input signal. Accordingly, when the signal level of the identifying signal S2 is logic "L" (this means that no paper L is disposed within the position detector 12), the AND circuit 32 produces a detection signal S11 for detecting the beginning of the film layer 8, the signal level of which falls from logic "H" to logic "L" when the signal level of the identifying signal S1 falls from logic "H" to logic "L" (this means that the aperture 11 is within the position detector 12).

The identifying signal S2 of the paper existence identifying circuit 25 is supplied to a second two-input AND circuit 34 as a first input signal, while the identifying signal S3 of the paper and end mark identifying circuit 29 is supplied to the second two-input AND circuit 34 as its second input signal. As a result, when the signal level of the identifying signal S3 becomes logic "H" (this means that the paper L is within the position detector 15), when the signal level of the identifying signal S2 rises from logic "L" to logic "H" (this means that the paper L is within the position detector 12), the second AND circuit 34 produces a paper insertion detection signal S12 whose signal level rises from logic "L" to logic "H".

The identifying signal S3 of the paper and end mark identifying circuit 29 is supplied to a third two-input AND circuit 35 as its first input signal, while the identifying signal S1 of the film existence identifying circuit 21 is supplied through an inverter 36 to the third AND circuit 35 as its second input signal. As a result, when the signal level of the identifying signal S1 is logic "L" (this means that neither the film 3 nor the paper L is within the position detector 12, in other words, the aperture 11 is there), when the signal level of the identifying signal S3 rises from logic "L" to logic "H" (this means that either the end mark 16 or the paper L is within the position detector 15), the third AND circuit 35 produces a film end detection signal S13 the signal level of which rises from logic "L" to logic "H".

As described above, the detection signal S11 for detecting the beginning of the film layer, the paper insertion detection signal S12 and the film end detection signal S13 supplied from the position detecting circuit 14 are respectively supplied to the drive control section 5 as the drive condition signals thereof.

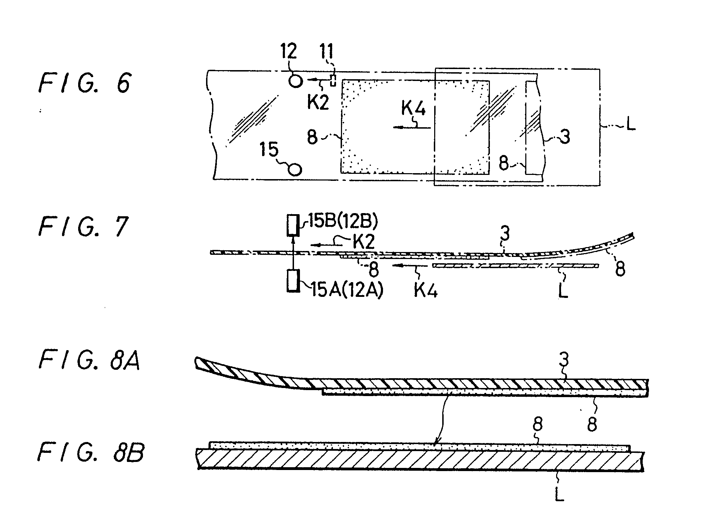

With this arrangement, when the aperture 11 for the film layer 8 has not yet reached the position of the position detector 12 as shown in Figures 6 and 7, the signals are in the state during a duration T2 in Figure 4. More particularly, since the film 3 is interposed within the position detectors 12 and 15, the detection signals D1 and D2 are at signal level L2 with the result that the signal levels of the identifying signals S1, S2 and S3 are respectively logic "H", logic "L" and logic "L" (as shown in Figures 4C, 4D and 4E). Therefore, the signal levels of the film beginning detection signal S11, the paper insertion detection signal S12 and the film end detection signal S13 are logic "H", logic "L" and logic "L" (as shown in Figures 4F, 4G and 4H) respectively.

At this time, the drive control circuit 5 controls the rotatable arm 9 to rotate to the position at which the idle roller 10 is remote from the guide roller 4R, and to rotate the take-up reel 2L and the ancillary roller 7 so as to feed the film 3 in the direction shown by the arrow K1 in Figure 2. Accordingly, the aperture 11 heading the film layer 8 is gradually moved to approach the position detector 12 as shown by an arrow K2 in Figures 6 and 7.

When the aperture 11 arrives at the position of the position detector 12, the signals are set in the state during a duration T3 in Figure 4. To be more specific, the film 3 is no longer at the position of the position detector 12, while the film 3 remains at the position of the position detector 15. Accordingly, the signal level of the detection signal D1 from the position detector 12 rises to the level L3 (Figure 4A), which fact is identified by the film existence identifying circuit 21 and so, the logic level of the identifying signal S1 falls from logic "H" to logic "L". Accordingly, the logic level of the detection signal S11 for detecting the beginning of the film layer produced at the output terminal of the first AND circuit 32 falls from logic "H" to logic "L". The timing at which the logic level of this detection signal S11 falls is indicative of the timing at which the aperture 11 for the film layer 8 arrives at a predetermined position, namely, the position of the position detector 12. At this instant, the drive control circuit 5 stops the rotation of the take-up reel 2L and of the ancillary roller 7.

Thus, the film 3 is placed in such a state that, of a large number of the film layers 8 which are sequentially coated on the film 3 as shown in Figure 6, the film layer 8 corresponding to the aperture 11 which exists at the position of the position detector 12 is positioned at a predetermined position just before entering the heat-bonding heater 6.

In this state, a sheet of the paper L is inserted between the guide roller 4R and the idle roller 10 in the direction shown by an arrow K3 in Figure 2, for example, manually. At that time, as shown by an arrow K4 in Figures 6 and 7, the head portion of the paper L is approaching the position detector 12. When the head portion of the paper L arrives at the position of the position detector 12, the paper L is interposed within the position detector 12, so that the light shielding state as shown by the duration T4 in Figure 4 is established.

At this time, the signal level of the detection signal D1 of the detector 12 falls to the lowest signal level L1 (Figure 4A), so that the identifying signal S1 of the film existence identifying circuit 21 and the identifying signal S2 of the paper existence identifying circuit 25 both rise to logic "H" (Figures 4C and 4D). If the paper L is inserted correctly, when the head portion thereof is interposed within the position detector 12, such head portion is interposed within the position detector 15 substantially simultaneously so that the logic level of the detection signal D2 also falls to the lowest signal level L1 (Figure 4B). Thus the logic level of the identifying signal S3 of the paper and end mark identifying circuit 29 has risen to logic "H" (Figure 4E). Accordingly, the logic level of the paper insertion detection signal S12 obtained at the output terminal of the AND circuit 34 rises from logic "L" to logic "H" (Figure 4G). The time of this rise of the logic level indicates the time at which the paper L is just set at a predetermined position so as to be superimposed on the film layer 8. Therefore, as the logic level of the detection signal S12 rises, the drive control circuit 5 rotates the rotatable arm 9 to allow the idle roller 10 rotatably to contact the guide roller 4R and drive the heat-bonding heater 6 to carry out the heating.

As described above, relative to the position of the heat-bonding film layer 8 of the film 3 positioned at the predetermined position by the position detector 12, the position of the paper L is determined so as to coincide by using the position detectors 12 and 15, whereby the paper L is superimposed on the heat-bonding film layer 8 in just the right-position. Thereafter, the paper L and the film layer 8, which are superimposed on each other, are gripped and held by the idle roller 10 of the rotatable arm 9, and the guide roller 4R. The heater 6 is then heated to enter a preparatory heating state.

When the paper has been positioned, if the paper L is inserted so as to be greatly displaced in the lateral direction relative to the film 3, the paper L may be outside the position detectors 12 and 15. As a result, the logic level of either the identifying signal S2 or S3 becomes logic "L", so that the logic level of the paper insertion detection signal S12 produced at the output terminal of the AND circuit 34 does not rise up to logic "H" but remains as logic "L". Accordingly, it is possible effectively to prevent the paper L, which is inserted incorrectly, from being fed in the direction of the heater 6. Moreover, if the paper L were displaced, then if the heat-bonding film layer 8 were softened by the heater 6, there is a risk that the material of the film layer 8 will adhere to the ancillary roller 7. However, if the position detecting circuit 14 is constructed as shown in Figure 5, this possibility is avoided.

When the temperature of the heater 6 is raised and the film layer 8 softens for bonding, this temperature is detected by a temperature detector 17 which is provided within the heater 6 (Figure 2). Then, the temperature detector 17 supplies a temperature detection signal S21 to the drive control circuit 5 which therefore drives the take-up reel 2L and the ancillary roller 7 to rotate. At this time, the film 3 is fed in the direction shown by the arrow K1 by the take-up reel 2L, and the paper L is pressed against the film 3 by the guide roller 4R and the idle roller 10, so the paper L is fed together with the film 3 through the position detectors 12 and 15 to the nip between the heater 6 and the ancillary roller 7. Thus, the film layer 8 adhering to the film 3 is softened so as to be bonded firmly on the paper L and released from the film 3 at the same time. Accordingly, when the film 3 and the paper L pass through the space between the heater 6 and the auxiliary roller 7 to reach the exit side thereof, the film layer 8 adhering to the film 3 (Figure 8A) is transferred to the surface of the paper L (Figure 8B). As a result, the paper L which has been subjected to a so-called lamination treatment is produced at the exit side of the heater 6 and the ancillary roller 7, and the film 3 with the film layer 8 having been peeled off is taken up the take-up reel 2L.

When film feeding in this way, the aperture 11 which was interposed in the detector 12 passes over the detector 12 so that the signal levels of the detection signals D1 and D2 of the position detectors 12 and 15 are returned to the state similar to those described in connection with the duration T2 in Figure 4. When the film 3 is fed by one pitch W (Figure 3A) and the aperture 11 corresponding to the succeeding heat-bonding film layer 8 arrives at the position of the position detector 12, the signal levels become as described in connection with the duration T3 in Figure 4, so that the drive control circuit 5 stops the take-up reel 2L and the ancillary roller 7 from rotating and stops the heating operation of the heater 6. Also, the drive control section 5 rotates the rotatable arm 9 in such a direction that the idle roller 10 becomes spaced from the guide roller 4R. Consequently, the film 3 is stopped with the next heat-bonding film layer 8 positioned at the predetermined position and the film laminating apparatus 1 is set to a stand-by mode for awaiting the insertion of a new paper L.

Thus, the heat-bonding film layer 8 which is sequentially deposited on the film 3 is melt-bonded on the paper L and then laminated on the paper L which is sequentially inserted in the duration T5 shown in Figure 4.

Then, when the last heat-bonding film layer 8 is positioned at the position of the position detector 12, the signal levels become as shown by the duration T6 in Figure 4. That is, at this time, since the aperture 11 is interposed within the position detector 12, the signal level of the detection signal D1 is raised to the highest signal level L3 (Figure 4A), while at the same time since the end mark 16 is interposed within the detector 15, the signal level of the detection signal D2 is lowered to the lowest signal level L1 (Figure 4B). Accordingly, although the signal level of the identifying signal S1 falls to logic "L" similarly to the case of the duration T3, the signal level of the identifying signal S3 rises to logic "H" unlike the case of the duration T3. Consequently, the signal level of the film end detection signal S13 which is produced at the output terminal of the AND circuit 35 rises from logic "L" to logic "H" (Figure 4H). As a result, on the basis of the timing at which the film end detection signal S13 rises to logic "H", the drive control circuit 5 can judge that all of the heat-bonding film layers 8 of the film 3 have been used, and then changes the mode of the film laminating apparatus 1 to the stop mode.

In consequence, the signal levels when the film 3 is released from the supply reel 2R and the take-up reel 2L become as shown by the duration T1 in Figure 4.

While in the above description the spacing (namely, the pitch W) of the film layers 8 which are deposited on the film 3 is taken to be equal for all the film layers 8, it is possible for the film layers 8 to have different spacings. In the above embodiment of the invention, when the heat-bonding film layer 8 is transferred from the film 3 to the paper L, the heater 6 is in close contact with the ancillary roller 7. However, various modifications are possible in which, for example, a pair of heated rollers, each of which rotatably contacts the other are used to bond the film layer 8 on the paper L.

While the aperture 11 is provided to locate the beginning of the film layer 8 deposited on the film 3, a material having a predetermined optical transmissivity may alternatively be coated on or bonded to the film 3. In short, it is sufficient to provide an optical position indicating means whose optical transmissivity is different from that of the film 3.

Since the heading aperture 11 is formed through the film 3 in correspondence with each heat-bonding film layer 8 on the film 3, and the aperture 11 is used to determine the position of each film layer 8 with the paper L in cooperation with the optical position detector, a film laminating apparatus which is capable of laminating the film layer 8 on the paper L in the required predetermined position with high accuracy can be realized by a relatively simple construction.

Since the plate heater is used as the heating means, the heat capacity can be made small and it is possible greatly to reduce the time from powering the apparatus to starting the laminating operation. Also, since it is not necessary to energize the apparatus at all time, much power is saved.

Furthermore, since the heat is applied only when it is required, the film 3 remains in the apparatus throughout, so that the laminating operation can be carried out automatically.

In addition, since it is not necessary to use a heat roller which would raise the ambient temperature, heat-resisting or heat-insulating parts are not required, so the manufacturing cost is lowered.

## Claims

1. A film laminating apparatus (1) comprising:
   a work station;
   means for conveying a film (3) to said work station;
   means for conveying papers (L) to said work station; and
   transfer means (6, 7) located at said work station for transferring a heat activated workpiece (8) on said film (3) to a respective paper (L) and comprising heating means (6) including a heating plate, and optical position detecting means (12) located at the entrance side of said transfer means (6, 7) and capable of detecting optical position indicating means (11) on said film (3) to indicate the position of said workpiece (8); characterized in that:
   said film (3) and said papers (L) are transported through said work station along substantially parallel paths;
   said transfer means (6, 7) aso comprises an unheated roller (7); and
   the detected output of said position detecting means (12) is used to position the leading edge of a respective said paper (L) and said position indicating means (11) at said position detecting means (12) to align said paper (L) in contact with a said workpiece (8) formed by a heat activatable type film layer (8), for advancement to said transfer means (6, 7).

2. Apparatus according to claim 1 wherein a second optical position detecting means (15) is provided at a predetermined position at the entrance side of said transfer means (6, 7) for detecting a second optical position indicating means (16) having an optical tranmissivity different from that of said film (3) provided at the last one of said workpieces (8).

**Patentansprüche**

1. Vorrichtung (1) zum Laminieren von Filmen mit einer Arbeitsstation,

einer Einrichtung zum Transportieren eines Films (3) zur Arbeitsstation,

einer Einrichtung zum Transportieren von Blättern Papier (L) zur Arbeitsstation, und

einer an der Arbeitsstation angeordneten Übertragungseinrichtung (6, 7) zum Übertragen eines wärmeaktivierten Werkstücks (8) auf dem Film (3) zu einem zugeordneten Blatt Papier (L), die eine Heizeinrichtung (6) mit einer Heizplatte und eine auf der Eingangsseite der Übertragungseinrichtung angeordnete optische Positionserfassungseinrichtung (12) aufweist, mit welcher ein optisches Positionsanzeigemittel (11) auf dem Film (3) zum Anzeigen der Position des Werkstücks (8) erfaßbar ist,

dadurch gekennzeichnet, daß der Film (3) und die Blätter Papier (L) durch die Arbeitsstation längs im wesentlichen paralleler Wege transportiert sind,

daß die Übertragungseinrichtung auch eine ungeheizte Rolle (7) aufweist, und

das erfaßte Ausgangssignal der Positionserfassungseinrichtung (12) dazu benutzt ist, die Führungskante eines jeweiligen Blattes Papier (L) und das Positionsanzeigemittel (11) an der Positionserfassungseinrichtung zu positionieren, um das Blatt Papier (L) im Kontakt mit dem durch eine wärmeaktivierbare Filmschicht gebildeten Werkstück (8) für eine Beförderung zur Übertragungseinrichtung (6, 7) auszurichten.

2. Vorrichtung nach Anspruch 1, wobei an einer vorbestimmten Stelle auf der Eingangsseite der Übertragungseinrichtung (6, 7) eine zweite optische Positionserfassungseinrichtung (15) zum Erfassen eines an dem letzten der Werkstücke (8) vorgesehenen zweiten optischen Positionsanzeigemittels (16) mit einer von der optischen Durchlässigkeit des Films (3) verschiedenen optischen Durchlässigkeit vorgesehen ist.

**Revendications**

1. Appareil (1) de stratification de pellicules, comprenant:

un poste de travail;

un moyen servant à transporter une pellicule (3) jusqu'audit poste de travail;

un moyen servant à transporter des papiers (L) jusqu'audit poste de travail et

un moyen de transfert (6, 7) disposé audit poste de travail et servant à transférer sur un papier respectif (L) une pièce thermiquement activée (8) se trouvant sur ladite pellicule (3), le moyen de transfert comprenant un moyen de chauffage (6) qui comporte une plaque chauffante, et un moyen (12) de détection optique de position disposé du côté d'entrée dudit moyen de transfert (6, 7) et susceptibile de détecter un moyen (11) d'indication optique de position se trouvant sur ladite pellicule (3) pour indiquer la position de ladite pièce (8); caractérisé en ce que:

ladite pellicule (3) et lesdits papiers (L) sont transportés dans ledit poste de travail suivant des trajets sensiblement parallèles;

ledit moyen de transfert (6, 7) comprend un cylindre non chauffé (7); et

le signal de sortie détecté dudit moyen (12) de détection de position est utilisé pour positionner le bord antérieur d'un dit papier respectif (L) et ledit moyen d'indication de position (11) sur ledit moyen de détection de position (12) afin d'aligner ledit papier (L) en contact avec une dite pièce (8) formée par une couche de pellicule du type thermiquement activable (8), en vue de l'avancement jusqu'audit moyen de transfert (6, 7).

2. Appareil selon la revendication 1, où un deuxième moyen (15) de détection optique de position est prévu en une position prédéterminée du côté d'entrée dudit moyen de transfert (6, 7) afin de détecter un deuxième moyen (16) d'indication optique de position, ayant un coefficient de transmission optique différent de celui de ladite pellicule (3), qui se trouve sur la dernière desdites pièces (8).

FIG. 1

FIG. 2

*F I G. 3A*

*F I G. 3B*

FIG. 4A
FIG. 4B
FIG. 4C
FIG. 4D
FIG. 4E
FIG. 4F
FIG. 4G
FIG. 4H

EP 0 147 966 B1

## F I G. 5

FIG. 6

FIG. 7

FIG. 8A

FIG. 8B

EP 0 147 966 B1